(19) Europäisches Patentamt
European Patent Office
Office européen des brevets

(11) EP 1 159 346 B1

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(21) Anmeldenummer: **00909118.2**

(22) Anmeldetag: **29.01.2000**

(51) Int Cl.[7]: **C08K 13/00**
// (C08K13/00, 3:22, 5:00), C08K11:00

(86) Internationale Anmeldenummer:
**PCT/EP00/00699**

(87) Internationale Veröffentlichungsnummer:
**WO 00/046289 (10.08.2000 Gazette 2000/32)**

(54) **FLAMMGESCHÜTZTE FORMMASSEN**

FLAME-PROOFED MOLDING MATERIALS

MATI RES MOULABLES IGNIFUG ES

(84) Benannte Vertragsstaaten:
**AT BE CH CY DE DK ES FI FR GB GR IE IT LI LU MC NL PT SE**

(30) Priorität: **05.02.1999 DE 19904698**

(43) Veröffentlichungstag der Anmeldung:
**05.12.2001 Patentblatt 2001/49**

(73) Patentinhaber: **BASF AKTIENGESELLSCHAFT
67056 Ludwigshafen (DE)**

(72) Erfinder:
- **KLATT, Martin
D-68165 Mannheim (DE)**
- **NAM, Michael
D-80992 München (DE)**

(56) Entgegenhaltungen:
**EP-A- 0 129 805**
**EP-A- 0 295 336**
**EP-A- 0 376 261**
**EP-A- 0 421 307**

- **DATABASE WPI Section Ch, Week 199106 Derwent Publications Ltd., London, GB; Class A28, AN 1991-041106 XP002138856 & JP 02 308848 A (DAINIPPON INK & CHEM KK) , 21. Dezember 1990 (1990-12-21)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 159 346 B1

Printed by Jouve, 75001 PARIS (FR)

## Beschreibung

Die Erfindung betrifft thermoplastische Formmassen, enthaltend

| | | |
|---|---|---|
| A) | 10 bis 98,9 Gew.-% | eines thermoplastischen Polymeren |
| B) | 1 bis 30 Gew.-% | einer Flammschutzmittelkombination aus, bezogen auf 100 Gew.-% B), |
| | $b_1$) 20 bis 99 Gew.-% | eines halogenhaltigen Flammschutzmittels |
| | $b_2$) 1 bis 80 Gew.-% | eines Antimonoxides |
| C) | 0,1 bis 5 Gew.-% | eines Stabilisators, verschieden von Komponente $b_2$) oder D) |
| D) | 0 bis 70 Gew.-% | weiterer Zusatzstoffe |

wobei die Summe der Gewichtsprozente der Komponenten A) bis D) 100 % ergibt.

Weiterhin betrifft die Erfindung die Verwendung der erfindungsgemäßen Formmassen zur Herstellung von Fasern, Folien und Formkörpern sowie die hierbei erhältlichen Formkörper aller Art.

Aus der EP-A 410 301 und EP-A 736 571 sind beispielsweise halogenhaltige flammgeschützte Polyamide und Polyester bekannt, in denen meist als Synergist Antimonoxide eingesetzt werden.

Bei Anwendungen, insbesondere in der Elektroindustrie, sind Flammschutz und erhöhte Dauergebrauchstemperaturen gefordert. Insbesondere Polykondensate wie Polyamide und Polyester zeigen bei Wärmelagerung braune Färbungen und einen unerwünschten Molekulargewichtsabbau. Die Verfärbungen können teilweise durch Oxidationsstabilisatoren kompensiert werden, der Molekulargewichtsabbau jedoch nicht.

Metallsalze sind beispielsweise als Stabilisatoren für roten Phosphor als Flammschutzmittel (siehe DE-A 27 54 491) bekannt. Diese wirken gegen hydrolytische Spaltung des roten Phosphors insbesondere bei Polymeren, welche Wasser aufnehmen können.

Aufgabe der vorliegenden Erfindung war es daher, flammgeschützte halogenhaltige Formmassen zur Verfügung zu stellen, welche stabiler gegen Molekulargewichtsabbau bei der Verarbeitung sind und bei erhöhten Dauergebrauchstemperaturen stabiler sind.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 98,9, vorzugsweise 20 bis 97 und insbesondere 30 bis 80 Gew.-% eines thermoplastischen Polymeren, welches verschieden von B) und D) ist.

Grundsätzlich zeigt sich der vorteilhafte Effekt bei den erfindungsgemäßen Formmassen bei Thermoplasten jeglicher Art. Eine Aufzählung geeigneter Thermoplaste findet sich beispielsweise im Kunststoff-Taschenbuch (Hrsg. Saechtling), Auflage 1989, wo auch Bezugsquellen genannt sind. Verfahren zur Herstellung solcher thermoplastischer Kunststoffe sind dem Fachmann an sich bekannt.

Nachstehend seien einige bevorzugte Kunststoffarten etwas näher erläutert.

1. Polycarbonate und Polyester

Allgemein werden Polyester auf Basis von aromatischen Dicarbonsäuren und einer aliphatischen oder aromatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethylanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat

und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere *Monomereinheiten* enthalten.

Die Viskositätszahl der Polyester (A) liegt im allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, welche verschieden von PBT sind, wie beispielsweise Polyethylenterephthalat (PET). Der Anteil z.B. des Polyethylenterephthalates beträgt vorzugsweise in der Mischung bis zu 50, insbesondere 10 bis 30 Gew.-%, bezogen auf 100 Gew.-% A).

Weiterhin ist es vorteilhaft PET Rezyklate (auch scrap-PET genannt) in Mischung mit Polyalkylenterephthalaten wie PBT einzusetzen.

Unter Rezyklaten versteht man im allgemeinen:

1) sog. Post Industrial Rezyklat: hierbei handelt es sich um Produktionsabfälle bei der Polykondensation oder bei der Verarbeitung z.B. Angüsse bei der Spritzgußverarbeitung, Anfahrware bei der Spritzgußverarbeitung oder Extrusion oder Randabschnitte von extrudierten Platten oder Folien.

2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeltungsschritte erleichtert.

Sowohl granulierte als auch als Mahlgut vorliegende Rezyklate können zum Einsatz kommen, wobei die maximale Kantenlänge 6 mm, vorzugsweise kleiner 5 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise 0.01 bis 0,7, insbesondere 0,2 bis 0,6 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel

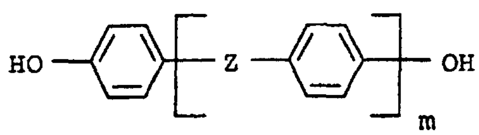 ,

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen I können an den Phenylengruppen auch $C_1$-$C_6$-Alkyl- oder Alkoxygruppen und Fluor, Chlor oder Brom als Substituenten tragen.

Als Stammkörper dieser Verbindungen seinen beispielsweise

Dihydroxydiphenyl,
Di-(hydroxyphenyl)alkan,

Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol Resorcin und
Hydrochinon sowie deren kernalkylierte oder kernhalogenierte Derivate genannt.

Von diesen werden

4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di(3'-methyl-4'-hydroxyphenyl)propan und
2,2-Di-(3'-chlor-4'-hydroxyphenyl)propan,

sowie insbesondere

2,2-Di-(4'-hydroxyphenyl)propan
2,2-Di(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan

oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Unter Polyestern im Sinne der vorliegenden Erfindung sollen auch Polycarbonate verstanden werden, die durch Polymerisation von aromatischen Dihydroxyverbindungen, insbesondere Bis-(4-hydroxyphenyl)2,2-propan (Bisphenol A) oder dessen Derivaten, z.B. mit Phosgen erhältlich sind. Entsprechende Produkte sind an sich bekannt und in der Literatur beschrieben sowie größtenteils auch im Handel erhältlich. Die Menge der Polycarbonate beträgt bis zu 90 Gew.-%, vorzugsweise bis zu 50 Gew.-%, insbesondere 10 bis 30 Gew.-% bezogen auf 100 Gew.-% der Komponente (A).

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

2. Vinylaromatische Polymere

Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000.

Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Bevorzugte ASA-Polymerisate sind aufgebaut aus einer Weich- oder Kautschukphase aus einem Pfropfpolymerisat aus:

$A_1$ 50 bis 90 Gew.-% einer Pfropfgrundlage auf Basis von

$A_{11}$ 95 bis 99,9 Gew.-% eines $C_2$-$C_{10}$-Alkylacrylats und
$A_{12}$ 0,1 bis 5 Gew.-% eines difunktionellen Monomeren mit zwei olefinischen, nicht konjugierten Doppelbindungen, und

$A_2$ 10 bis 50 Gew.-% einer Pfropfauflage aus

$A_{21}$ 20 bis 50 Gew.-% Styrol oder substituierten Styrolen der allgemeinen Formel I oder deren Mischungen, und

$A_{22}$ 10 bis 80 Gew.-% Acrylnitril, Methacrylnitril, Acrylsäureestern oder Methacrylsäureestern oder deren Mischungen,

in Mischung mit einer Hartmatrix auf Basis eines SAN-Copolymeren $A_3$) aus:

$A_{31}$ 50 bis 90, vorzugsweise 55 bis 90 und insbesondere 65 bis 85 Gew.-% Styrol und/oder substituierten Styrolen der allgemeinen Formel I und

$A_{32}$ 10 bis 50, vorzugsweise 10 bis 45 und insbesondere 15 bis 35 Gew.-% Acrylnitril und/oder Methacrylnitril.

Bei der Komponente $A_1$) handelt es sich um ein Elastomeres, welches eine Glasübergangstemperatur von unter -20, insbesondere unter -30°C aufweist.

Für die Herstellung des Elastomeren werden als Hauptmonomere $A_{11}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht $A_{11}$ + $A_{12}$ eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $A_1$ sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $A_1$ am Pfropfpolymerisat $A_1$+$A_2$ beträgt 50 bis 90, vorzugsweise 55 bis 85 und insbesondere 60 bis 80 Gew.-%, bezogen auf das Gesamtgewicht von $A_1$+$A_2$.

Auf die Pfropfgrundlage $A_1$ ist eine Pfropfhülle $A_2$ aufgepfropft, die durch Copolymerisation von

$A_{21}$ 20 bis 90, vorzugsweise 30 bis 90 und insbesondere 30 bis 80 Gew.-% Styrol oder substituierten Styrolen der allgemeinen Formel

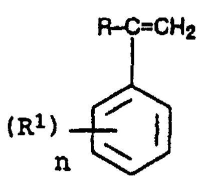

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$A_{22}$ 10 bis 80, vorzugsweise 10 bis 70 und insbesondere 20 bis 70 Gew.-% Acrylnitril, Methacrylnitril, Acrylsäureestern oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Bevorzugte Acryl- bzw. Methacrylsäureester sind solche, deren Homopolymere bzw. Copolymerisate mit den anderen Monomeren der Komponente $A_{22}$) Glasübergangstemperaturen von mehr als 20°C aufweisen; prinzipiell können jedoch auch andere Acrylsäureester eingesetzt werden, vorzugsweise in solchen Mengen, so daß sich insgesamt für die Komponente $A_2$ eine Glasübergangstemperatur $T_g$ oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger $T_g$ zu bilden, vorzugsweise in nicht zu hohem Anteil eingesetzt wird.

Die Pfropfhülle $A_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat $A_1 + A_2$ weist im allgemeinen eine mittlere Teilchengröße von 100 bis 1.000 nm, im besonderen von 200 bis 700 nm, ($d_{50}$-Gewichtsmittelwert) auf. Die Bedingungen bei der Herstellung des Elastomeren $D_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat ($A_1$+$A_2$) zählen im Rahmen dieser Erfindung auch die bei der Pfropfmischpolymerisation zur Herstellung der Komponente $A_2$) entstehenden freien, nicht gepfropften Homo- und Copolymerisate.

Nachstehend seien einige bevorzugte Pfropfpolymerisate angeführt:

1: 60 Gew.-% Pfropfgrundlage $A_1$ aus

$A_{11}$ 98 Gew.-% n-Butylacrylat und
$A_{12}$ 2 Gew.-% Dihydrodicyclopentadienylacrylat und
40 Gew.-% Pfropfhülle $A_2$ aus
$A_{21}$ 75 Gew.-% Styrol und
$A_{22}$ 25 Gew.-% Acrylnitril

2: Pfropfgrundlage wie bei 1 mit 5 Gew.-% einer ersten Pfropfhülle aus Styrol und

35 Gew.-% einer zweiten Pfropfstufe aus
$A_{21}$ 75 Gew.-% Styrol und
$A_{22}$ 25 Gew.-% Acrylnitril

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhältnis 3:1

Die als Komponente $A_3$) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von ($A_1 + A_2$):$A_3$ liegt im Bereich von 1:2,5 bis 2,5:1, vorzugsweise von 1:2 bis 2:1 und insbesondere von 1:1,5 bis 1,5:1.

Geeignete SAN-Polymere als Komponente A) sind vorstehend (siehe $A_{31}$ und $A_{32}$) beschrieben.

Die Viskositätszahl der SAN-Polymerisate, gemessen gemäß DIN 53 727 als 0,5 gew.-%ige Lösung in Dimethylformamid bei 23°C liegt im allgemeinen im Bereich von 40 bis 100, vorzugsweise 50 bis 80 ml/g.

ABS-Polymere als Polymer (A) in den erfindungsgemäßen mehrphasigen Polymermischungen weisen den gleichen Aufbau wie vorstehend für ASA-Polymere beschrieben auf. Anstelle des Acrylatkautschukes $A_1$) der Pfropf-

grundlage beim ASA-Polymer werden üblicherweise konjugierte Diene, eingesetzt, so daß sich für die Pfropfgrundlage $A_4$ vorzugsweise folgende Zusammensetzung ergibt:

$A_{41}$ 70 bis 100 Gew.-% eines konjugierten Diens und
$A_{42}$ 0 bis 30 Gew.-% eines difunktionellen Monomeren mit zwei olefinischen nicht-konjugierten Doppelbindungen

Pfropfauflage $A_2$ und die Hartmatrix des SAN-Copolymeren $A_3$) bleiben in der Zusammensetzung unverändert. Derartige Produkte sind im Handel erhältlich. Die Herstellverfahren sind dem Fachmann bekannt, so daß sich weitere Angaben hierzu erübrigen.

Das Gewichtsverhältnis von ($A_4$ + $A_2$):$A_3$ liegt im Bereich von 3:1 bis 1:3, vorzugsweise von 2:1 bis 1:2.

Besonders bevorzugte Zusammensetzungen der erfindungsgemäßen Formmassen enthalten als Komponente A) eine Mischung aus:

| | | |
|---|---|---|
| $A_1$) | 10 bis 90 Gew.-% | eines Polybutylenterephthalates |
| $A_2$) | 0 bis 40 Gew.-% | eines Polyethylenterephthalates |
| $A_3$) | 1 bis 40 Gew.-% | eines ASA- oder ABS-Polymeren oder deren Mischungen |

Derartige Produkte sind unter dem Warenzeichen Ultradur® S (ehemals Ultrablend® S) von der BASF Aktiengesellschaft erhältlich.

Weitere bevorzugte Zusammensetzungen der Komponente A) enthalten

| | | |
|---|---|---|
| $A_1$) | 10 bis 90 Gew.-% | eines Polycarbonates |
| $A_2$) | 0 bis 40 Gew.-% | eines Polyesters, vorzugsweise Polybutylenterephthalat, |
| $A_3$) | 1 bis 40 Gew.-% | eines ASA- oder ABS-Polymeren oder deren Mischungen. |

Derartige Produkte sind unter dem Warenzeichen Terblend® der BASF AG erhältlich.

3. Polyamide

Die Polyamide der erfindungsgemäßen Pormmassen weisen im allgemeinen eine Viskositätszahl von 90 bis 350, vorzugsweise 110 bis 240 ml/g auf bestimmt in einer 0,5 gew.-%-igen Lösung in 96 Gew.-%iger Schwefelsäure bei 25°C auf gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

4. Polyphenylenether

Geeignete Polyphenylenether weisen im allgemeinen ein Molekulargewicht (Gewichtsmittelwert) im Bereich von 10 000 bis 80 000, vorzugsweise von 20 000 bis 60 000 und insbesondere von 40 000 bis 55 000 auf.

Die Molekulargewichtsverteilung wird im allgemeinen mittels Gelpermeationschromatographie (GPC) bestimmt. Hierzu werden PPE-Proben in THF unter Druck bei 110°C gelöst. Bei Raumtemperatur wird mit THF als Elutionsmittel 0,16 ml einer 0,25 %igen Lösung auf geeignete Trennsäulen injiziert. Die Detektion erfolgt allgemein mit einem UV-Detektor. Die Trennsäulen werden zweckmäßig mit PPE-Proben bekannter Molekulargewichtsverteilung geeicht.

Dies entspricht einer reduzierten spezifischen Viskosität $\eta_{red}$ von 0,2 bis 0,9 dl/g, vorzugsweise von 0,35 bis 0,8 und insbesondere 0,45 bis 0,6, gemessen in einer 0,5 Gew.-%igen Lösung in Chloroform bei 25°C.

Die unmodifizierten Polyphenylenether $a_1$) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Die als Komponente $a_1$) verwendeten Polyphenylenether können gegebenenfalls verfahrensbedingte Fehlstellen enthalten, die beispielsweise bei White et al., Macromolecules 23, 1318-1329 (1990) beschrieben sind.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-pheny-len)ether, Poly(2,6-diphenyl-1,4-phenylen) ether, Poly(2,6-dimethoxi-1,4-phenylen)ether, Poly(2,6-Diethoxi-1,4-phenylen)ether, Poly(2-methoxi-6-ethoxi-1,4-phenylen)ether, Poly(2-ethyl-6-stearyloxi-1,4-phenylen)ether, Poly(2,6-dichlor-1,4-phenylen)ether, Poly(2-methyl-6-phenyl-1,4-phenylen)ether, Poly(2,6-dibenzyl-1,4-phenylen)ether, Poly(2-ethoxi-1,4-phenylen)ether, Poly(2-chlor-1,4-phenylen)ether, Poly(2,5-dibrom-1,4-phenylen)ether. Bevorzugt werden Polyphenylenether eingesetzt, bei denen die Substituenten Alkylreste mit 1 bis 4 Kohlenstoffatomen sind, wie Poly(2,6-dimethyl-1,4-phenylen(ether, Poly (2,6-diethyl-1,4-phenylen)ether, Poly(2-methyl-6-ethyl-1,4-phenylen)ether, Poly(2-methyl-6-propyl-1,4-phenylen) ether, Poly(2,6-dipropyl-1,4-phenylen)ether und Poly(2-ethyl-6-propyl-1,4-phenylen)ether.

Weiterhin sind Pfropfcopolymere aus Polyphenylenether und vinylaromatischen Polymeren wie Styrol, $\alpha$-Methylstyrol, Vinyltoluol und Chlorstyrol geeignet.

Funktionalisierte oder modifizierte Polyphenylenether sind an sich bekannt, z.B. aus WO-A 86/02086, WO-A 87/00540, EP-A-222 246, EP-A-223 116 und EP-A-254 048 und werden bevorzugt für Mischungen mit PA oder Polyester eingesetzt.

Üblicherweise wird ein unmodifizierter Polyphenylenether $a_1$) durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit z.B. mit dem Polyamid gewährleistet ist.

Die Modifizierung wird im allgemeinen durch Umsetzung eines unmodifizierten Polyphenylenethers $a_1$) mit einem Modifiziermittel, das mindestens eine der oben genannten Gruppen und mindestens eine C-C-Doppel- oder C-C-Dreifachbindung enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel ($a_3$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$- bis $C_8$-Alkanolen ($a_{31}$), die Monooder Diamide dieser Säuren wie N-Phenylmaleinimid (Monomere $a_{32}$), Maleinhydrazid. Weiterhin seien beispielsweise N-Vinylpyrrolidon und (Meth)acryloylcaprolactam ($a_{33}$) genannt.

Bevorzugt wird in den erfindungsgemäßen Pormmassen als Komponente A) ein modifizierter Polyphenylenether eingesetzt, der durch Umsetzen von

$a_1$) 70 bis 99,95, bevorzugt 76,5 bis 99,94 Gew.-% eines unmodifizierten Polyphenylenethers,

$a_2$) 0 bis 25, bevorzugt 0 bis 20 Gew.-% eines vinylaromatischen Polymeren,

$a_3$) 0,05 bis 5, bevorzugt 0,05 bis 2,5 Gew.-% mindestens einer Verbindung aus der Gruppe gebildet aus

$a_{31}$) einer $\alpha,\beta$-ungesättigten Dicarbonylverbindung,

$a_{32}$) eines Amid-Gruppen enthaltenden Monomeren mit einer polymerisierbaren Doppelbindung und

$a_{33}$) eines Lactam-Gruppen enthaltenden Monomeren mit einer polymerisierbaren Doppelbindung,

$a_4$) 0 bis 5, bevorzugt 0,01 bis 0,09 Gew.-% eines Radikalstarters,

wobei sich die Gewichtsprozente auf die Summe von $a_1$) bis $a_4$) beziehen, im Verlaufe von 0,5 bis 15 Minuten bei 240 bis 375°C in geeigneten Misch- und Knetaggregaten wie Zweischneckenextrudern erhältlich ist.

Das vinylaromatische Polymer $a_2$) soll vorzugsweise mit dem eingesetzten Polyphenylenether verträglich sein, wie vorstehend unter 2. beschrieben.

Beispiele für bevorzugte, mit Polyphenylenethern verträgliche vinylaromatische Polymere sind der bereits erwähnten Monografie von Olabisi, S. 224 bis 230 und 245 zu entnehmen.

Als Radikalstarter $a_4$) seien genannt:

Di-(2,4-dichlorbenzoyl)peroxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäurebutylester, 2,2-Di-tert.-butylperoxybutan, Dicumylperoxid, tert.-Butylcumylperoxid, 1,3-Di-(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhyroperoxid sowie hochverzweigte Alkane der allgemeinen Struktur

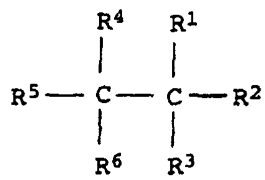

wobei $R^1$ bis $R^6$ Alkylgruppen mit 1 bis 8 C-Atomen, Alkoxygruppen mit 1 bis 8 C-Atomen, Arylgruppen wie Phenyl, Naphthyl oder 5-oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Besonders bevorzugte Polyphenylenether A) in den erfindungsgemäßen Formmassen werden durch Modifizierung mit Maleinsäure, Maleinsäureanhydrid und Fumarsäure erhalten. Derartige Polyphenylenether weisen vorzugsweise eine Säurezahl von 1,8 bis 3,2, insbesondere von 2,0 bis 3,0 auf.

Die Säurezahl ist ein Maß für den Modifizierungsgrad des Polyphenylenethers und wird im allgemeinen durch Titration mit Basen unter Inertgasbedingungen bestimmt.

Die Säurezahl entspricht allgemein der Menge an Base in mg, welche zur Neutralisation von 1 g eines derart säuremodifizierten Polyphenylenethers A) benötigt wird (nach DIN 53 402).

Als weitere geeignete Polymere seien Polyolefine wie Polyethylen oder Polypropylenhomo- oder copolymerisate genannt.

Als Komponente B) enthalten die erfindungsgemäßen Formmassen 1 bis 30, vorzugsweise 2 bis 25 und insbesondere 5 bis 20 Gew.-% einer Flammschutzmittelkombination aus

$b_1$) 20 bis 99, vorzugsweise 50 bis 85 Gew.-% eines halogenhaitigen Flammschutzmittels,

$b_2$) 1 bis 80 Gew.-%, vorzugsweise 15 bis 50 Gew.-% eines Antimonoxides.

Bevorzugte Oxide $b_2$) sind Antimontrioxid und Antimonpentoxid. Zur besseren Dispergierung kann das Oxid $b_2$) in sogenannten Batches (Konzentraten) in das Polymer A) eingearbeitet werden, wobei im Konzentrat Polymere

beispielsweise eingesetzt werden können, welche Komponente A) entsprechen oder verschieden von der jeweiligen Komponente A) sind. Bevorzugt sind Konzentrate von $b_2$) in Polyolefinen, vorzugsweise Polyethylen.

Geeignete Flammschutzmittel $b_1$) sind vorzugsweise bromierte Verbindungen, wie bromierte Oligocarbonate (BC 52 oder BC 58 der Firma Great Lakes), bromierte Diphenylether, Polypentabrombenzylacrylat (z.B. FR 1025 der Firma Dead Sea Bromine (DSB)), bromierte Trimethylphenylindane (FR 1808 von DSB), oligomere Umsetzungsprodukte aus Tetrabrombisphenol-A mit Epoxiden (z. B. FR 2300 und FR 2400 der Firma DSB), Tetrabrombisphenol-A und Hexabromcyclododecan.

Die als Flammschutzmittel vorzugsweise eingesetzten bromierten Oligostyrole haben einen mittleren Polymerisationsgrad (Zahlenmittel) zwischen 3 und 90, vorzugsweise zwischen 5 und 60, gemessen dampfdruckosmometrisch in Toluol. Zyklische Oligomere sind ebenfalls geeignet. Gemäß einer bevorzugten Ausführungsform der Erfindung weisen die einzusetzenden bromierten oligomeren Styrole die nachstehende Formel I auf, in der R Wasserstoff oder ein aliphatischer Rest, insbesondere ein Alkylrest wie z. B. $CH_2$ oder $C_2H_5$ und n die Anzahl der sich wiederholenden Kettenbausteine bedeuten. R' kann sowohl H als auch Brom als auch ein Fragment eines üblichen Radikalbildners sein:

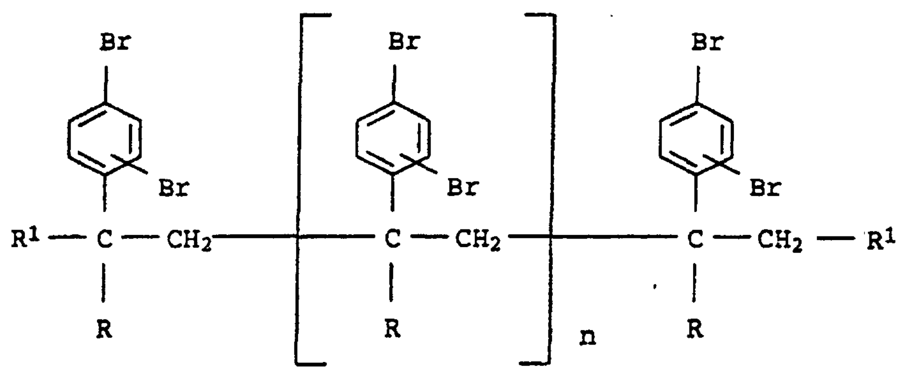

(I)

Der Wert n kann 1 - 88, vorzugsweise 3 - 58, betragen. Die bromierten Oligostyrole enthalten 40 bis 80 Gew.-% vorzugsweise 55 bis 70 Gew.-% Brom. Bevorzugt ist ein Produkt, das überwiegend aus Polydibromstyrol besteht. Die Substanzen sind unzersetzt schmelzbar und z. B. in Tetrahydrofuran löslich. Sie können hergestellt werden entweder durch Kernbromierung von - gegebenenfalls aliphatisch hydrierten - Styrololigomeren, wie sie z. B: durch thermische Polymerisation von Styrol erhalten werden (nach DT-OS 25 37 385) oder durch radikalische Oligomerisierung von geeigneten bromierten Styrolen. Die Herstellung des Flammschutzmittels kann auch durch ionische Oligomerisation von Styrol und anschließende Bromierung erfolgen. Die zur Flammfestausrüstung der Polyamide notwendige Menge an bromiertem Oligostyrol hängt vom Bromgehalt ab. Der Bromgehalt in den erfindungsgemäßen Formmassen beträgt von 2 bis 20 Gew.-%, vorzugsweise von 5 bis 12 Gew.-%.

Die bromierten Polystyrole gemäß der Erfindung werden üblicherweise nach dem in der EP-A 47 549 beschriebenen Verfahren erhalten:

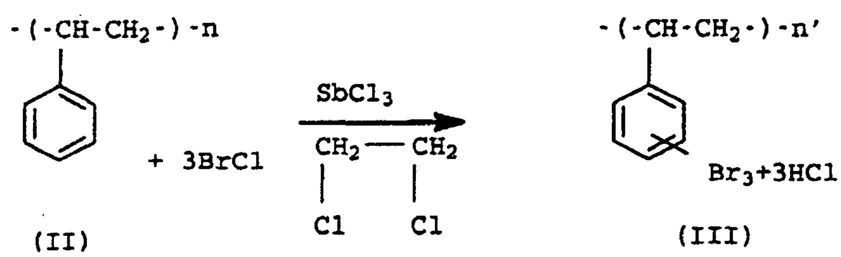


(II) (III)

Die nach diesem Verfahren und im Handel erhältlichen bromierten Polystyrole sind vorwiegend kernsubstituierte tribromierte Produkte. n' (s. III) hat allgemein Werte von 125 bis 1 500, was einem Molekulargewicht von 42 500 bis 235 000 vorzugsweise von 130 000 bis 135 000 entspricht.

Der Bromgehalt (bezogen auf den Gehalt an kernsubstituiertem Brom) beträgt im allgemeinen mindestens 55, vorzugsweise mindestens 60 und insbesondere 65 Gew.-%.

Die im Handel erhältlichen pulverförmigen Produkte weisen im allgemeinen eine Glastemperatur von 160 bis 200°C auf und sind beispielsweise unter den Bezeichnungen HP 7010 der Firma Albemarie und Pyrocheck® PB 68 der Firma Ferro Corporation erhältlich.

Es können auch Mischungen der bromierten Oligistyrole mit bromierten Polystyrolen in den erfindungsgemäßen Formmassen eingesetzt werden, wobei das Mischungsverhältnis beliebig ist.

Weiterhin sind chlorhaltige Flammschutzmittel $b_1$) geeignet, wobei Dechlorane® plus der Firma Oxychem bevorzugt ist.

Die erfindungsgemäßen Formmassen enthalten einen Stabilisator C) in Mengen von 0,1 bis 5, vorzugsweise 0,5 bis 4 und insbesondere 0,7 bis 3 Gew.-% sowie ganz besonders bevorzugt von 0,7 bis 2 Gew.-%, vorzugsweise mindestens eine sauerstoff- oder schwefeloder stickstoffhaltige Metallverbindung. Insbesondere bevorzugt sind sauerstoff- oder schwefelhaltige Zink- oder Erdalkaliverbindungen oder deren Mischungen.

Als erste Gruppe bevorzugter Metallverbindungen seien Hydrotalcit, ZnO, Bleioxid, Eisenoxid, Aluminiumoxid, $TiO_2$, CaO, SnO und MgO, $Mg(OH)_2$ oder deren Mischungen genannt, wobei ZnO bevorzugt ist. Geeignete Metallborate sind solche der Erdalkalimetalle wie Ba-, Ca- und Mg-borat, wobei wasserfreies Zinkborat oder Zinkborat der allgemeinen Formel

$$2\ ZnO \cdot 3\ B_2O_3 \cdot H_2O$$

in der x 3,3 bis 3,7 bedeutet, bevorzugt sind.

Als Metallsulfide können beispielsweise ZnS oder SnS eingesetzt werden, wobei ZnS bevorzugt ist.

Erdalkalicarbonate sind ebenso als Komponente C) geeignet, wobei $BaCO_3$ und $MgCO_3$ und insbesondere $CaCO_3$ bevorzugt sind. Von den stickstoffhaltigen Verbindungen sind insbesondere Nitride wie beispielsweise TiN, Bornitride, Magnesium- und Zinknitrid geeignet. Als geeignete Phosphate seien Zink- und Calciumphosphat insbesondere genannt.

Selbstverständlich können auch Mischungen eingesetzt werden, wobei das Mischungsverhältnis beliebig ist.

Als Komponente D) können die erfindungsgemäßen Formmassen 0 bis 70, insbesondere bis zu 50 Gew.-% weiterer Zusatzstoffe enthalten.

Als Komponente D) können die erfindungsgemäßen Formmassen 0 bis 5, insbesondere 0,01 bis 5, vorzugsweise 0,05 bis 3 und insbesondere 0,1 bis 2 Gew.-% mindestens eines Esters oder Amids gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weitere Zusatzstoffe D) sind beispielsweise in Mengen bis zu 40, vorzugsweise bis zu 30 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien,

nicht-konjugierte Diene mit 5 bis 25 C-Atomen wie Penta-1,4-dien, Hexa-1,4-dien, Hexa-1,5-dien, 2,5-Dimethylhexa-2,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norborne und Tricyclodiene wie 3-Methyl-tricyclo(5.2.1.0.$^{2.6}$)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$$R^1C\,(COOR^2)=C\,(COOR^3)\,R^4 \qquad (I)$$

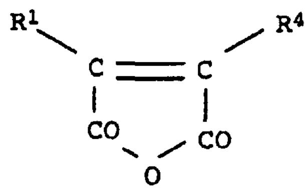

(II)

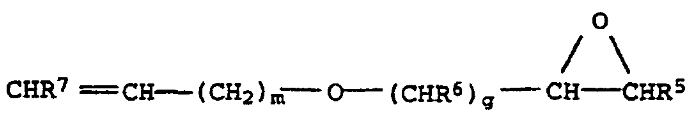

(III)

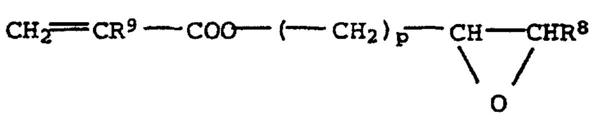

(IV)

wobei $R^1$ bis $R^9$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste $R^1$ bis $R^9$ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppenenthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

50 bis 98, insbesondere 55 bis 95 Gew.-% Ethylen,

0,1 bis 40, insbesondere 0,3 bis 20 Gew.-% Glycidylacrylat und/oder Glycidylmethacrylat, (Meth)acrylsäure und/oder Maleinsäureanhydrid, und

1 bis 45, insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

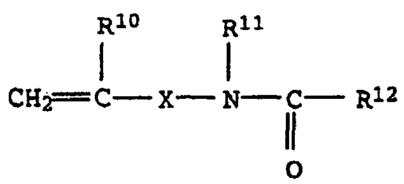

eingeführt werden können,
wobei die Substituenten folgende Bedeutung haben können:

$R^{10}$ Wasserstoff oder eine $C_1$- bis $C_4$-Alkylgruppe,

$R^{11}$ Wasserstoff, eine $C_1$- bis $C_8$-Alkylgruppe oder eine Arylgruppe, insbesondere Phenyl,

$R^{12}$ Wasserstoff, eine $C_1$- bis $C_{10}$-Alkyl-, eine $C_6$- bis $C_{12}$-Arylgruppe oder $-OR^{13}$

$R^{13}$ eine $C_1$- bis $C_8$-Alkyl- oder $C_6$- bis $C_{12}$-Arylgruppe, die gegebenenfalls mit O- oder N-haltigen Gruppen substituiert sein können,

X eine chemische Bindung, eine $C_1$- bis $C_{10}$-Alkylen- oder $C_6$-$C_{12}$-Arylengruppe oder

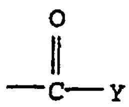

Y O-Z oder NH-Z und

Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylatoder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere 1 bis 40 %, insbesondere 20 bis 35 Gew.-% eingesetzt werden.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$$(X\text{-}\ (CH_2)_n)_k\text{-Si-}\ (O\text{-}C_mH_{2m+1})_{4\text{-}k}$$

in der die Substituenten folgende Bedeutung haben:

X 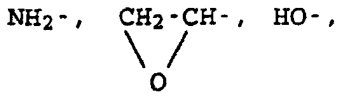 .

n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf D) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Als Komponente D) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten, welche verschieden von den Komponenten B) und C) sind.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Weitere Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer bevorzugten Arbeitsweise können die Komponenten B) bis D) sowie gegebenenfalls übliche Zusatzstoffe E) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch gute Dauergebrauchsstabilität bei hohen Temperaturen und gute Flammschutzeigenschaften aus. Die Verarbeitung erfolgt weitestgehend ohne Veränderung der Polymermatrix (Verfärbung). Weiterhin zeichnen die Formmassen sich durch eine gute Stabilität des Molekulargewichtes bei der Verarbeitung aus. Sie eignen sich zur Herstellung von Fasern, Folien und Formkörpern, insbesondere für Anwendungen im Elektro- und Elektronikbereich. Diese Anwendungen sind insbesondere Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

Beispiele

Komponente A1: Polybutylenterephthalat mit einer Viskositätszahl von 125 ml/g und einem Carboxylendgruppengehalt von 25 mval/kg (VZ gemessen in 0,5 gew.-%iger Lösung aus Phenol/o-Dichlorbenzol), 1:1-Mischung bei 25°C gemäß ISO 1628.

Komponente $b_1$: bromiertes Oligocarbonat (BC 52 der Firma Great Lakes)

Komponente $b_2$: Antimontrioxid (als Konzentrat 90 %ig in Polyethylen)

Komponente C/1: Zinkoxid

Komponente C/2: Calciumcarbonat

Komponente D/1: Glasfasern mit einer mittleren Dicke von 10 µm (epoxysilanisierte Schlichte)

Komponente D/2: Polytetrafluorethylen (Teflon)

Bei den Beispielen 1 und V1 wurden zunächst die Komponenten A), $b_1$) und $b_2$) und ausschließlich D/1 und D/2 auf einem Extruder bei 250°C gemischt, homogenisiert, granuliert und getrocknet. Das Granulat wurde anschließend auf einem Kneter bei 250°C und 60 upm mit den Komponenten C/1 und C/2 gemischt.
Bei den Beispielen 2, 3 und V2 wurde Komponente A mit D1 auf einem Extruder bei 250°C konfiktioniert und das Granulat anschließend mit den Komponenten b und C auf einem Kneter bei 250°C und 60 upm verarbeitet.
Bei den Beispielen 1, 2 und V1 wurde nach 10, 20 und 30 Min. jeweils eine Probe entnommen und bei 160 °C (unter Luft) gelagert. Sowohl von den in den jeweiligen Zeitabständen entnommenen und gelagerten Proben als auch von den nicht gelagerten Proben wurde die Viskositätszahl gemäß ISO 1628 gemessen. Bei den Beispielen 2, 3 und V2 wurden Proben nach 5, 10 und 20 Min. entnommen.

Die Zusammensetzungen der Formmassen und die Ergebnisse der Messungen sind der Tabelle zu entnehmen.

Tabelle

| Beispiele | 1 | V1 | 2 | 3 | V2 |
|---|---|---|---|---|---|
| Komponenten [Gew%] | | | | | |
| A/1 | 51,2 | 51,8 | 56 | 55,3 | 56,7 |
| $b_1$ | 13 | 13 | 13 | 13 | 13 |
| $b_2$ | 5 | 5 | 6 | 6 | 6 |
| C/1 | 1 | - | 1 | - | - |
| C/2 | - | - | - | 2 | - |
| D/1 | 29,7 | 30 | 24 | 23,7 | 24,3 |
| D/2 | 0,2 | 0,2 | | | |
| VZ(5 min, 0d@ 160°C) (ml/g) | | | 123 | 121 | 110 |
| VZ(10 min, 0d@ 160°C) (ml/g) | 76 | 75 | 126 | 120 | 113 |
| VZ(10 min, 10d@ 160°C) (ml/g) | 71 | 58 | | | |
| VZ(10 min, 20d@ 160°C) (ml/g) | 60 | 55 | | | |
| VZ(10 min, 30d@ 160°C) (ml/g) | 49 | 43 | | | |
| VZ(20 min, 0d@ 160°C) (ml/g) | 79 | 74 | 122 | 129 | 115 |
| VZ(20 min, 10d@ 160°C) (ml/g) | 64 | 59 | | | |
| VZ(20 min, 20d@ 160°C) (ml/g) | 58 | 54 | | | |
| VZ(20 min, 30d@ 160°C) (ml/g) | 49 | 42 | | | |
| VZ(30 min, 0d@ 160°C) (ml/g) | 77 | 74 | 120 | 121 | 107 |

| Beispiele | 1 | V1 | 2 | 3 | V2 |
|---|---|---|---|---|---|
| VZ(30 min, 10d@ 160°C) (ml/g) | 60 | 56 | | | |
| VZ(30 min, 20d@ 160°C) (ml/g) | 55 | 50 | | | |
| VZ(30 min, 30d@ 160°C) (ml/g) | 48 | 42 | | | |

**Patentansprüche**

1. Thermoplastische Formmassen, enthaltend

   A) 10 bis 98,9 Gew.-% eines thermoplastischen Polymeren

   B) 1 bis 30 Gew.-% einer Flammschutzmittelkombination aus, bezogen auf 100 Gew.-% B),

      $b_1$) 20 bis 99 Gew.-% eines halogenhaltigen Flammschutzmittels

      $b_2$) 1 bis 80 Gew.-% eines Antimonoxides

   C) 0,1 bis 5 Gew.-% eines Stabilisators aus einer sauerstoff- oder stickstoff- oder schwefelhaltigen Zinkverbindung oder deren Mischungen

   D) 0 bis 70 Gew.-% weiterer Zusatzstoffe

   wobei die Summe der Gewichtsprozente der Komponenten A) bis D) 100 % ergibt.

2. Thermoplastische Formmassen nach Anspruch 1, in denen das thermoplastische Polymer ausgewählt ist aus der Gruppe der Polyamide, Polyester, vinylaromatischen Polymeren, ASA-, ABS-, SAN-Polymeren oder deren Mischungen.

3. Thermoplastische Formmassen nach den Ansprüchen 1 oder 2, in denen die Komponente A) aus Polybutylenterephthalat aufgebaut ist, welches 0 bis 50 Gew.%, bezogen auf 100 Gew.% A), an Polyestern verschieden von Polybutylenterephthalat enthalten kann.

4. Thermoplastische Formmassen nach den Ansprüchen 1 bis 3, in denen $b_2$) aus Antimontrioxid oder Antimonpentoxid oder deren Mischungen aufgebaut ist.

5. Thermoplastische Formmassen nach den Ansprüchen 1 bis 4, enthaltend ZnO, ZnS, Zinkborat, $Zn_3N_2$, $Zn_3(PO_4)_2$, oder deren Mischungen als Komponente C).

6. Verwendung der thermoplastischen Formmassen gemäß den Ansprüchen 1 bis 5 zur Herstellung von Fasern, Folien und Formkörpern.

7. Formkörper, erhältlich aus den thermoplastischen Formmassen gemäß den Ansprüchen 1 bis 5.

**Claims**

1. A thermoplastic molding composition comprising

   A) from 10 to 98.9% by weight of a thermoplastic polymer,

   B) from 1 to 30% by weight of a flame retardant combination made from, based on 100% by weight of B),

      $b_1$) from 20 to 99% by weight of a halogen-containing flame retardant, and

      $b_2$) from 1 to 80% by weight of an antimony oxide,

   C) from 0.1 to 5% by weight of a stabilizer made from an oxygen- or nitrogen- or sulfur-containing compound of zinc, or made from mixtures of these,

   D) from 0 to 70% by weight of other additives,

   where the sum of the percentages by weight of components A) to D) is 100%.

**2.** A thermoplastic molding composition as claimed in claim 1, where the thermoplastic polymer has been selected from the class consisting of polyamides, polyesters, vinylaromatic polymers, ASA polymers, ABS polymers, SAN polymers and mixtures of these.

**3.** A thermoplastic molding composition as claimed in claim 1 or 2, where component A) is composed of polybutylene terephthalate which may comprise, based on 100% by weight of A), from 0 to 50% by weight of polyesters different from polybutylene terephthalate.

**4.** A thermoplastic molding composition as claimed in any of claims 1 to 3, where $b_2$) is composed of antimony trioxide or antimony pentoxide or mixtures of these.

**5.** A thermoplastic molding composition as claimed in any of claims 1 to 4, comprising, as component C), ZnO, ZnS, zinc borate, $Zn_3N_2$, $Zn_3(PO_4)_2$ or mixtures of these.

**6.** The use of the thermoplastic molding compositions as claimed in any of claims 1 to 5 for producing fibers, films or moldings.

**7.** A molding obtainable from the thermoplastic molding compositions as claimed in any of claims 1 to 5.

**Revendications**

**1.** Masses de moulage thermoplastiques, contenant

A) 10 à 98,9% en poids d'un polymère thermoplastique,
B) 1 à 30% en poids d'une combinaison d'agent ignifuge à base, par rapport à 100% en poids de B),

$b_1$) de 20 à 99% en poids d'un agent ignifuge contenant de l'halogène,
$b_2$) de 1 à 80% en poids d'un oxyde d'antimoine,

C) 0,1 à 5% en poids d'un agent stabilisant à base d'un composé de zinc contenant de l'oxygène ou de l'azote ou du soufre ou leurs mélanges,
D) 0 à 70% en poids d'autres additifs,

la somme des % en poids des composants A) à D) donnant 100%.

**2.** Masses de moulage thermoplastiques suivant la revendication 1, dans lesquelles le polymère thermoplastique est choisi parmi le groupe des polyamides, des polyesters, des polymères vinylaromatiques, des polymères ASA, ABS, SAN ou de leurs mélanges.

**3.** Masses de moulage thermoplastiques suivant l'une des revendications 1 et 2, dans lesquelles le composant A) est constitué de téréphtalate de polybutylène, qui peut contenir 0 à 50% en poids, par rapport à 100% en poids de A), de polyesters différents du téréphtalate de polybutylène.

**4.** Masses de moulage thermoplastiques suivant l'une des revendications 1 à 3, dans lesquelles $b_2$) est constitué de trioxyde d'antimoine ou de pentoxyde d'antimoine ou de leurs mélanges.

**5.** Masses de moulage thermoplastiques suivant l'une des revendications 1 à 4, contenant du ZnO, du ZnS, du borate de zinc, du $Zn_3N_2$, du $Zn_3(PO_4)_2$ ou de leurs mélanges, comme composant C).

**6.** Utilisation des masses de moulage thermoplastiques suivant l'une des revendications 1 à 5, pour la préparation de fibres, de feuilles et de corps moulés.

**7.** Corps moulés, que l'on peut obtenir à partir des masses de moulage thermoplastiques suivant l'une des revendications 1 à 5.